# EUROPEAN PATENT SPECIFICATION

(11) **EP 3 718 989 B1**
(45) Date of publication and mention of the grant of the patent: **22.04.2026**
(21) Application number: 17933470.1
(22) Date of filing: 01.12.2017
(51) Int. Cl.: C05G 3/00, C05F 3/00, C05F 11/00, C05F 11/02, C05G 3/50, C05G 3/70, C05G 5/27, A01C 3/00

(54) **METHOD FOR THE TREATMENT OF ORGANIC ANIMAL WASTE AND USE OF THE THUS TREATED PRODUCT AS A FERTILISER**
VERFAHREN ZUR BEHANDLUNG VON ORGANISCHEM TIERABFALL UND VERWENDUNG DES SO BEHANDELTEN PRODUKTS ALS DÜNGEMITTEL
PROCÉDÉ DE TRAITEMENT DE DÉCHETS ORGANIQUES ANIMAUX ET UTILISATION DU PRODUIT AINSI TRAITÉ COMME ENGRAIS

(43) Date of publication of application: 07.10.2020
(73) Proprietor: Fertinagro Biotech, S.L., 44195 Teruel (ES)
(72) Inventor: ATARES REAL, Sergio, 44195 Teruel (ES); ROMERO LOPEZ, Joaquin, 44195 Teruel (ES); NARANJO OLIVERO, Miguel Angel, 44195 Teruel (ES); SALAET MADORRAN, Ignasi, 44195 Teruel (ES); FERRER GINES, María, 44195 Teruel (ES); YANCE CHAVEZ, Tula del Carmen, 44195 Teruel (ES); ALIGUE ALEMANY, Rosa, 44195 Teruel (ES)
(74) Representative: González López-Menchero, Álvaro Luis
(86) International application number: PCT/ES2017/070793
(87) International publication number: WO 2019/106210

(56) References cited:
- CN-A- 104 429 557
- CN-A- 105 850 576
- CN-A- 107 141 151
- CN-A- 107 266 237
- DE-A1- 10 120 372
- DE-A1- 102012 100 315
- RU-C2- 2 568 124

## Description

The present invention relates to a method for the treatment of manure and slurry of housed animals on livestock farms, as well as the use of the product obtained by means of said treatment as a liquid fertiliser applied directly to crops via irrigation.

Thus, in a first aspect, the invention provides a method for the treatment of manure and slurry of housed animals on livestock farms and, in a second aspect, relates to the use of the product obtained by means of said treatment as a liquid fertiliser applied directly to crops via irrigation.

The extent of manure and slurry from housed animals on farms or livestock farms, for example, pigs, cows, horses, etc., has increased in recent years as a result of changes on livestock farms. This has increased the need to reuse this waste in agriculture as an alternative to traditional organic fertilisation with classic dry manure (Giardini et al., Effect of poultry manure and mineral fertilise on the yield of crops, J. AGRIC, SCI. 72, 161, -164). 1992). Manure is made up of solid and liquid dejections and cattle beds.

Slurry is the liquid from the mix of urines from cattle in housing with the liquids flowing from the dunghill. According to the Energy Agency of Extremadura and with respect to the production of manure and slurry, in general, an average daily production of solid and liquid dejections equivalent to 7% of the live weight of the animal is accepted, although it depends on various factors which cause fluctuations of this value.

Furthermore, for example, pig slurry has highly variable chemical features that depend on numerous factors, among which are the type of farm of origin (fattening, improvement, closed loop), the type of feeding, the form of separation, the storage of excrement and the management of water on the farm, which affects the final dilution of the slurry. In this regard, see for example table 1, where the diversity of pig slurry is shown according to their origin:

**Table 1**

| | Fattening farms | Farms of breeding mothers | Closed loop farms |
|---|---|---|---|
| pH | 7.55 | 7.6 | 7.58 |
| EC (dS/m) | 25.4 | 15 | 18.4 |
| MO/MF (‰) | 72.8 | 61.8 | 62.8 |
| N-total (kg/m³) | 7.65 | 5.17 | 5.4 |
| N-org. (kg/m³) | 3.00 | 1.97 | 2.22 |
| N-NH₃ (kg/m³) | 4.63 | 3.20 | 3.18 |
| P₂O₅ (kg/m³) | 6.52 | 5.91 | 6.23 |
| K₂O (kg/m³) | 4.47 | 2.31 | 2.8 |
| N-total/MS (%) | 7.63 | 6.38 | 5.78 |
| Ca/MF (%o) | 4.50 | 4.50 | 3.93 |
| Mg/MF (‰) | 1.16 | 1.11 | 1.25 |
| Na/MF (%o) | 0.72 | 0.43 | 0.54 |
| Cu/MF (ppm) | 67.0 | 19.1 | 36 |
| Zn/MF (ppm) | 70.7 | 68.8 | 64.6 |
| Fe/MF (ppm) | 437 | 345 | 372 |
| Mn/MF (ppm) | 76.1 | 38.5 | 37.7 |
| Na/MS (%o) | 6.84 | 5.49 | 5.94 |
| Cu/MS (ppm) | 624 | 193 | 430 |
| Zn/MS (ppm) | 658 | 759 | 719 |
| Fe/MS (ppm) | 3,752 | 3,620 | 3,730 |
| Mn/MS (ppm) | 407 | 428 | 405 |

This variability of the features of pig slurry, for example, entails certain problems for use thereof as direct fertiliser, such as possible contamination of aquifers by elements such as phosphorus and nitrogen, which cause the eutrophication of these underground bodies of water.

In order to avoid this kind of problems, different methods for the treatment of this type of materials have been developed, for example thermal drying, composting, biological treatments, cogenerative fermentations, and similar.

Thus, for example, from the international application WO2005028382A1, a method is known for the reduction of the pollutant load of the slurry comprising the steps of: anaerobic digestion of the slurry; separation of the solid matter from the digested slurry and distillation of the clarified liquid slurry, obtaining a final liquid slurry with lesser polluting load. Furthermore, ES2153739A1 describes a method for treating slurry comprising a first step of mechanical separation of the solid fraction from the rest of the slurry; a second step in which the conditioning of the liquid resulting from the first step is carried out by oxidation with ozone and neutralisation with nitric acid, phosphoric acid, sulphuric acid or other acid, until obtaining a pH of the slurry between 2 and 6; and a third step of distillation of the liquid from the second step, the water being separated from the salts present therein. Although in some of these known methods it is possible to energetically reuse part of the waste generated, for example in the form of biogas, they remain unprofitable methods that entail expensive facilities wherein the energy invested is not compensated by the product obtained.

Document DE102012100315 refers to a reagent-free, energetic process and associated system for the production of suspensions containing humine for the production of a highly biologically active humic suspension based on digested sludge, peat and organic waste, preferably chicken manure, as a basis for the production of organic-mineral fertilizers or basic fertilizer for ecological and traditional agriculture for conservation and restoring the soil quality and increasing the yield and cleaning of wastewater. The use of the teachings from this document to treat livestock manure would generate high concentrations of heavy metals and soluble antibiotics, generating toxicity to crops, accordingly the teachings from this document could not be applied for the treatment of organic animal waste, manure and slurry as disclosed in the present application.

Document RU2568124 discloses a method of obtaining a concentrated fertilizer from bird droppings, which consists in: mix said bird droppings with water in a predetermined ratio to obtain a homogeneous mass; load the resulting homogeneous mass into a dispersion chamber and heat said homogeneous mass to a predetermined temperature; served in a sealed dispersion chamber a predetermined static pressure; process the contents of the said dispersion chamber with ultrasonic vibrations with a sound density of at least 60 W / cm ² , providing for a predetermined time the sound pressure on said homogeneous mass exceeding the said static pressure by a predetermined value.

Document DE10120372 discloses a new liquid and/or solid, nitrogen-containing organic fertilizer (I) comprises the chemical and/or biological products of plant-derived humus, humic material and manure, obtained by direct or indirect chemical reaction of humus (formed by aerobic and/or anaerobic fermentation of mainly vegetable material) with high molecular humic acids and/or their salts and manure. It is also included the preparation of by mixing humus, high molecular humic acids and/or their salts and manure to cause direct reaction.

Document CN107266237 discloses a compound fertilizer for improving the disease-resisting capability of camellia flower. The compound fertilizer is prepared from the following raw materials in parts by weight: 10 to 18 parts of kiln ash potassium fertilizer, 4 to 10 parts of calcium triple superphosphate, 10 to 20 parts of potassium nitrate, 3 to 7 parts of ground phosphate rock, 25 to 45 parts of ammonium hydrogen carbonate, 0.3 to 0.9 part of potassium molybdate, 0.4 to 1.2 parts of magnesium sulfate, 0.2 to 0.6 part of zinc nitrate, 2 to 4 parts of calcium nitrate, 0.3 to 0.7 part of diaminoferric xanthohumate, 3 to 7 parts of diatomite, 2 to 4 parts of borax, 30 to 50 parts of sheep manure, 15 to 25 parts of silkworm excrement, 20 to 30 parts of straw powder, 40 to 60 parts of soybean meal, 2 to 4 parts of active carbon, 10 to 18 parts of potato protein powder, 2 to 4 parts of P-benzoquinone, 2 to 4 parts of hydroquinone and 10 to 18 parts of linen fiber compound whey protein.

Document CN107141151 discloses a kind of lotus rhizome growth environment-friendly fertilizer and preparation method. The fertilizer includes feces of livestock and poultry, straw, wheat bran, husk, plant ash, bed-silt, attapulgite, activated carbon, humus, fertilizer additive, microbial bacterial agent. The preparation method includes a extraction process which is carried out to fertilizer additive first, then the fertilizer additive after extraction is dispersed on attapulgite, finally each group is placed in fermentation vat again and fermented.

Furthermore, in the particular case of slurry, the direct application thereof as a fertiliser entails certain drawbacks, among which the following can be pointed out:
- They contain very little dry matter, so although they contain proportionately large amounts of nitrogen and phosphorus compared to dry matter, they are actually very poor as fertilisers. This renders the application thereof unprofitable if it is necessary to transport it far from the place of production.
- The pH thereof is very high, which enables ammoniacal nitrogen to volatilise, further reducing fertiliser power.
- It contains significant amounts of solids. This feature implies that the application thereof must be done by sprinkling with a tank or by deposition with tubes hanging from a tank. This makes the application thereof more expensive, further reducing its value as a fertiliser.
- It contains significant amounts of ammoniacal nitrogen in a large volume of water. Ammoniacal nitrogen will be transformed into nitric acid by soil microorganisms, and, due to the load thereof, it leaches very easily into the deep parts of the earth, generating pollution.
- The C:N ratio of slurry is very low, so the N will be hardly fixed in organic matter and retained.

Furthermore, the fact that it must be applied using tractors implies that the application thereof can only be carried out at times when there are no crops or when they are young, at which time there is no great demand for nutrients and the seedlings are not able to assimilate all the fertiliser applied. Due to the features of the slurry, the fertiliser is not retained in the soil waiting for the plant to grow and be used. Because the C:N ratio is exceedingly small, this element will not be able to be used by soil microorganisms to generate organic nitrogen and this, in conjunction with the large volume of water that accompanies these elements, fosters filtering towards deeper soils, where there is less and less organic matter and they are more difficult to retain, eventually reaching the underground bodies of water, polluting and eutrophising them.

The present invention solves these drawbacks of known methods by providing a method for the treatment of manure and slurry of housed animals on livestock farms which enables a more efficient and flexible final fertiliser product in terms of the possibilities of use thereof to be obtained, in particular obtaining a liquid fertiliser which can be applied by fertigation.

Thus, after previous accumulation of slurry and manure in rafts for that purpose, the method for the treatment of this organic animal waste of the invention comprises the following steps:
i) Crushing the mixture of slurry and manure to a solids size of less than 2 mm and adding a dispersant and a wetting agent to the crushed mixture, obtaining a dispersion in solution and a correct break-up of the solids;
ii) Applying ultrasound (sonication) to the dispersed mixture to, on one hand, achieve a solid size of less than 50 µm and, on the other, physically break down the cells of possible microorganisms present in the mixture;
iii) Increasing the C:N ratio of the sonicated mixture to a C:N ratio of at least 15 by adding carbon-rich organic matter;
iv) Homogenising the mixture thus obtained and adding an acid to pH between 4.5 and 6.5,
v) Adding activated carbon to the homogenised mixture and rebalancing the C:N ratio by adding organic nitrogen in the form of biogenic polyamines and
vi) Milling the mixture obtained in liquid phase to obtain a particle size of 10 to 20 µm.

Given that initially the average size of manure is very variable, for example from 1 mm to 200 mm, the crushing of step i) to a solids size of less than 2 mm enables a suitable mixture to be obtained for subsequent treatment steps. In one embodiment of the invention, this crushing step is carried out using a continuous solids crusher or in-line diffuser. The application of a dispersant and a wetting agent to the crushed mixture in step i) enables a dispersion in solution and a correct break-up of the solids to be obtained.

Preferably, the amount of dispersant to be applied to the mixture is in the range of 0.5 to 2% by weight. As dispersants in the method of the invention, one or more commercial dispersants can be used, for example of the Tamol^{®} NN986, Pluronics^{®} TDS, Morwet^{®} D-425 type, and similar.

In a preferred embodiment, the dispersants used in the method of the invention are humic substances, such as humic and/or fulvic acids and/or derivatives thereof. In this regard, the addition of humic substances as a dispersing agent is well known in the literature (see, for example, "Ácidos húmicos. Formas de extracción y usos" ["Humic acids. Forms of extraction and uses"]. Eng. Irina Pedroso Rodriguez, Dr Félix Juan Domínguez Alonso, University of Matanzas, 2006). Adding this dispersant enables the mixture to remain homogeneous, preventing lumps or unmixed remains from forming.

Furthermore, at this step the addition of a wetting agent is also anticipated, such as Agnique ^{®} PE TSP 16TE and similar. Preferably, the amount of wetting agent to be applied to the mixture is in the range of 0.1 to 2 % by weight.

Once the dispersant and the wetting agent have been added, the mixture is treated by sonication with ultrasound in step ii), for example by means of a 100 kW sonicator. As indicated above, this treatment enables a decrease in the size of solids to less than 50 µm and is also going to break up the cells that may have been formed due to the growth of microorganisms in the rafts. It should be noted that the method of the invention results in a fertiliser for fertigation and this has to be packaged and stored for a certain time. In this context, the application of ultrasound makes it possible to avoid the need to add preservatives to the final product for storage, thus enabling said product to be classified as ecological.

In one embodiment of the invention, the inlet flow of the dispersed mixture to the sonicator is approximately of 1,500 litres/h to ensure proper sonication.

Since the C:N ratio of the organic material in the storage rafts is approximately from 2 to 7, in step iii) of the method of the invention, the C:N ratio of the sonicated mixture is increased to at least 15 by adding carbon-rich organic matter. To this end, carbon-rich organic matter is preferably selected from among vegetable waste, for example pruning remains, leonardites, carbons or derivatives thereof, monosaccharides, disaccharides, polysaccharides, organic acids, glycerines or fatty acids, preferably leonardites, glycerine or polysaccharides.

The acid added in step iv) can be an inorganic acid, preferably selected from the group consisting of sulphuric or phosphoric acids, an organic acid, preferably selected from the group consisting of citric, gluconic, or formic acids or any type of fulvic acid. The amount of acid to be added will depend on the pH of the mixture, the target pH being between 4.5 and 6.5, as mentioned earlier.

Once the mixture is stabilised, activated carbon is added thereto. In a preferred embodiment, the amount of carbon to be added to the mixture is of 2% by weight.

Due to the treatment with drugs applied to animals, especially antibiotics, waste from farms may contain traces of these products, which are not desirable for a fertiliser since they can affect beneficial microorganisms in the soil or crops, such antibiotics are eliminated to the extent possible according to the invention by the use of activated carbon. Activated carbon has the ability to retain or adsorb these substances without generating by-products that may be toxic or pharmacologically active. In this regard, see for example Gonzalo Prados Joya, Tratamiento de Aguas para la Eliminación de Antibióticos-Nitroimidazoles-mediante Adsorción sobre Carbón Activado y Tecnologias Avanzadas de Oxidación (Water Treatment for the Elimination of Nitroimidazol-Antibiotics by Adsorption on Activated Carbon and Advanced Oxidation Technologies) (Editorial of the University of Granada DL: GR 1547-2010, ISBN: 978-84-693-0696-3, 2010).

The addition of carbon in step v) of the method of the invention causes an imbalance in the C:N 15 ratio sought. To rebalance this proportion, the invention anticipates the addition of biogenic polyamines, in particular putrescine, spermidine and cadaverine, to provide organic nitrogen. In one embodiment, biogenic polyamines are added in a proportion of 2 to 5% by weight.

In another embodiment, the biogenic polyamines provided are stabilised or fixed in galactomannans, such as guar gum or locust bean gum, for the purpose of increasing its stability and preventing its degradation. In this embodiment, the addition of stabilised polyamines with galactomannans, such as guar gum or locust bean gum, enables a storage-stable fertiliser product to be obtained, with the viscosity necessary for direct application thereof via irrigation water and without the formation of precipitates therein. Likewise, the addition of these polyamines stabilised with galactomannans makes it possible to facilitate the C:N ratio specified above, due to the polysaccharide nature of galactomannans.

In case the fertiliser product obtained according to steps i) to v) above does not have the desired viscosity and homogeneity, in an optional method step, this includes step vi) of adjusting the viscosity of the fertiliser product obtained in the previous steps with the purpose of facilitating direct application thereof via irrigation water, in particular providing a fertiliser that maintains its homogeneity, avoiding precipitation of the components thereof in short and medium periods of time, for example from 1 to 12 months. In order to achieve this, at this optional step, xanthan gum and guar gum are used as viscosity-adjusting agents. The amount of these agents to be applied will vary depending on the viscosity of the product obtained in steps i) to v) and the viscosity necessary for its application via irrigation water, this amount being able to range between 0.1 and 3% by weight.

The invention also relates to the use of the product obtained by means of the method described above as a liquid fertiliser applied by fertigation, directly via irrigation, on crops.

The amount per hectare of the fertiliser product obtained according to the invention applied to the crops depends on the type of crop. Thus, for example for an apple tree crop, the amount per hectare of fertiliser product applied by fertigation ranges from 100 to 200 litres per day of irrigation, irrigation being able to be performed between 2 and 3 times per week. This amount is much lower than the amount of slurry not treated with the method of the invention which would be necessary to obtain similar fertilisation results, this reduction being approximately to the order of 1,000 cubic metres less per hectare of crop.

In the description and the following examples, all percentages mentioned are percentages by weight.

### Examples

### Example 1: Effect of the C:N ratio on nitrogen fixation as organic nitrogen when applied to the soil

Four different products G1 to G4 were formulated according to the method described above using the following raw materials:
- Slurry (Total N: 0.51 %; P₂O₅ total: 0.57 %; Total C: 3.48)
- Glycerol (Total N: 0 %; P₂O₅ total: 0 %; Total C 39 %)
- Wetting agent (0.1 %), Agnique^{®}
- Dispersant (0.5 %), Morwet^{®}
- Xanthan gum (0.5 %)

The following table 1 shows the compositions of products G1 to G4:

**Table 1**

| | | |
|---|---|---|
| G1: 98.9 % slurry+manure | C:N = 6.82 | N = 0.51 % |
| G2: 94.75 % slurry + manure + 4.15 % Glycerol | C:N = 10.25 | N = 0.484 % |
| G3: 89.75 % slurry + manure + 9.15 % Glycerol | C:N = 14.59 | N = 0.459 % |
| G4: 84.75 % slurry + manure + 14.15 % Glycerol | C:N = 19.55 | N = 0.433 % |

All products were brought to pH 6 by using sulphuric acid.

The application of products with different C:N ratios was carried out in a soil without plants. The doses were 10 % of the amount of soil. G1 to G4 were left to stand for 7 days under controlled temperature conditions of 25 °C and relative humidity of 80 % and the organic nitrogen of the soil was quantified using the DUMAS method by means of a TruMacN, with a detection limit of 20 ppm. Concisely, the method entails the complete calcination of the soil with the product applied and the analysis at different wavelengths of the different compounds to be analysed.

The results are shown in the following table 2.

**Table 2**

| | Slurry + manure | G1 | G2 | G3 | G4 |
|---|---|---|---|---|---|
| Total N (ppm) | 860 | 1364 | 1312 | 1302 | 1245 |
| Organic N (ppm) | 800 | 1002 | 1095 | 1105 | 1171 |
| %organic N | 93.02 % | 73.46 % | 83.46 % | 84.87 % | 94.06 % |

The data shown in the table above demonstrates how the treatment with the G4 product facilitates a higher percentage of nitrogen compared to the rest of the treatments.

### Example 2: Effect of the C:N ratio on nitrogen fixation as organic nitrogen when applied to the soil

Four different products L1 to L4 were formulated according to the method described above using the following raw materials:
- Slurry (Total N: 0.51 %; P₂O₅ total: 0.57 %; Total C: 3.48)
- Leonardite (Total N: 0 %; P₂O₅ total: 0 %; Total C 42.12 %)
- Wetting agent (0.1 %), Agnique^{®}
- Dispersant (0.5 %), Morwet^{®}
- Xanthan gum (0.5 %)

The following table 3 shows the compositions of products L1 to L4:

**Table 3**

| | | |
|---|---|---|
| L1: 98.9 % slurry+manure | C:N = 6.82 | N = 0.51 % |
| L2: 94.9 % slurry + manure + 4.00 % Leonardite | C:N = 9.64 | N = 0.484 % |
| L3: 89.9 % slurry + manure + 9.00 Leonardite | C:N = 15.05 | N = 0.459 % |
| L4: 84.9 % slurry + manure + 14.00 % Leonardite | C:N = 20.38 | N = 0.433 % |

All products were brought to pH 6 by using sulphuric acid.

The application of products with different C:N ratios was carried out in a soil without plants. The doses were 10 % of the amount of soil. G1 to G4 were left to stand for 7 days under controlled temperature conditions of 25 °C and relative humidity of 80 % and the organic nitrogen of the soil was quantified using the DUMAS method by means of a TruMacN, as in Example 1.

The results are shown in the following table 4.

**Table 4**

| | C | L1 | L2 | L3 | L4 |
|---|---|---|---|---|---|
| Total N (ppm) | 869 | 1375 | 1357 | 1312 | 1237 |
| Organic N (ppm) | 781 | 1021 | 1099 | 1157 | 1184 |
| %organic N | 89.87 % | 74.25 % | 80.99 % | 88.19 % | 95.72 % |

As seen in the table above, a greater amount of organic nitrogen is retained with the L4 product. Thus, the application of the product according to the invention enables the crop to have nitrogen available for a longer period of time for use thereof, avoiding the mineralisation of nitrogen in the soil and the non-use or the loss thereof by evaporation when it transforms into ammoniacal nitrogen.

### Example 3: Effect of pH on nitrogen loss due to volatilisation

A product was obtained by applying the method described above using the following raw materials:
- Slurry 84.9 %
- Leonardite 14 %
- Wetting agent (0.1 %), Agnique^{®}
- Dispersant (0.5 %), Morwet^{®}
- Xanthan gum (0.5 %)

In order to obtain the target pH, it was stabilised at a different pH using sulphuric acid or formic acid. The product was stored in an open tank for 30 days, after which time the amount of remaining nitrogen was measured. The results are shown in table 5.

**Table 5**

| | Total N (Kg/m³) | Ammoniacal N (Kg/m³) | Total N (Kg/m³) | Ammoniacal N (Kg/m³) |
|---|---|---|---|---|
| | 0 days | 0 days | 30 days | 30 days |
| pH 8.5 Control | 5.21 | 3.12 | 4.41 | 2.73 |
| H₂SO₄ | | | | |
| pH 7.5 | 5.21 | 3.12 | 4.39 | 2.75 |
| pH 6.5 | 5.21 | 3.12 | 5.23 | 3.62 |
| pH 5.5 | 5.21 | 3.12 | 5.17 | 3.81 |
| pH 4.5 | 5.21 | 3.12 | 5.27 | 3.14 |
| H-COOH | | | | |
| pH 7.5 | 5.21 | 3.12 | 4.32 | 2.91 |
| pH 6.5 | 5.21 | 3.12 | 4.78 | 2.97 |
| pH 5.5 | 5.21 | 3.12 | 5.26 | 3.17 |
| pH 4.5 | 5.21 | 3.12 | 5.23 | 3.11 |

The data shown in the table above shows the greater stabilisation of the fertiliser product, which enables the shelf life thereof to increase, avoiding variations of pH that may entail modifications in the properties thereof.

### Example 4: Effect of the use of wetting agents and dispersants

The following products were obtained by applying the method of the invention:
Formula 4.1:
   - Slurry (Total N: 0.51 %; P₂O₅ total: 0.57 %; Total C: 3.48)
   - Leonardite (Total N: 0 %; P₂O₅ total: 0 %; Total C 42.12 %)
   - Wetting agent (0.1 %), Agnique^{®}
   - Dispersant (0.5 %), Morwet^{®}
   - Xanthan gum (0.5 %)
Formula 4.2:
   - Slurry (Total N: 0.51 %; P₂O₅ total: 0.57 %; Total C: 3.48)
   - Leonardite (Total N: 0 %; P₂O₅ total: 0 %; Total C 42.12 %)
   - Dispersant (0.5 %), Morwet^{®}
   - Xanthan gum (0.5 %)
Formula 4.3:
   - Slurry (Total N: 0.51 %; P₂O₅ total: 0.57 %; Total C: 3.48)
   - Leonardite (Total N: 0 %; P₂O₅ total: 0 %; Total C 42.12 %)
   - Wetting agent (0.1 %), Agnique^{®}
   - Xanthan gum (0.5 %)

In order to check the effect of adding the wetting agent and the dispersant, the time in which the sample is completely dissolved and dispersed is checked. The tests are carried out in a 500 ml reactor with a total amount of 500 grams of finished product. The results are shown in the following table 6.

**Table 6**

| | % organic material | Homogenisation time |
|---|---|---|
| Formula 4.1 | 20 % | 37 seconds |
| Formula 4.2 | 20 % | 92 seconds |
| Formula 4.3 | 20 % | 85 seconds |

As can be seen from the results, the break-up effect is much faster and more uniform with the use of the dispersant and the wetting agent, since there is no formation of different phases and it makes it possible to obtain a homogeneous solution.

### Example 6: Effect of adding activated carbon to retain antibiotics

Activated carbon has the function of retaining antibiotics present in slurry, and thus, enables the function of antibiotics in soils/crops/ etc. to be disabled. As can be seen from the data shown in table 7 below, with the application to the soil of slurry+manure which has not been treated with the method of the invention, the concentration of microorganisms present therein decreases notably due to the effect of said antibiotics. On the contrary, when the product is applied according to the invention, said decrease is not as pronounced due to the inactivation of antibiotics by means of said method.

**Table 7**

| | Concentration of microorganisms | | |
|---|---|---|---|
| | 24 hours | 100 hours | 200 hours |
| Slurry+manure | 2500000 | 1700000 | 1000000 |
| Fertiliser product obtained according to the invention | 3000000 | 2890000 | 2750000 |

## Claims

1. A method for the treatment of manure and slurry from housed animals on livestock farms after previous accumulation of slurry and manure in rafts for that purpose, the method including the following steps:
i) Crushing the slurry and manure mixture to a solids size of less than 2 mm and adding a dispersant and a wetting agent to the crushed mixture, obtaining a dispersion in solution and a correct break-up of the solids;
ii) Applying ultrasound (sonication) to the dispersed mixture until a solid size of less than 50 µm is achieved, physically breaking down cells of possible microorganisms present in the mixture;
iii) Increasing the C:N ratio of the sonicated mixture to a C:N ratio of at least 15 by adding carbon-rich organic matter;
iv) Homogenising the obtained mixture and adding an acid to achieve a pH between 4.5 and 6.5,
v) Adding activated carbon to the homogenised mixture and rebalancing the C:N ratio by adding organic nitrogen in the form of biogenic polyamines and
vi) Milling the mixture obtained in liquid phase to obtain a particle size of 10 to 20 µm.

2. The method for the treatment of manure and slurry according to claim 1, **characterised in that** the amount of dispersant is in the range of 0.5 to 2% by weight.

3. The method for the treatment of manure and slurry according to claim 1, **characterised in that** humic substances are used as dispersants, such as humic and/or fulvic acids and/or derivatives thereof.

4. The method for the treatment of manure and slurry according to claim 1, **characterised in that** the amount of wetting agent to be applied to the mixture is in the range of 0.1 to 2% by weight.

5. The method for the treatment of manure and slurry according to claim 1, **characterised in that** the carbon-rich organic matter is selected from among vegetable waste, leonardites, carbons or derivatives thereof, monosaccharides, disaccharides, polysaccharides, organic acids, glycerines or fatty acids.

6. The method for the treatment of manure and slurry according to claim 5, **characterised in that** the carbon-rich organic matter is selected from among leonardites, glycerine or polysaccharides.

7. The method for the treatment of manure and slurry according to claim 1, **characterised in that** the acid is selected from the group consisting of sulphuric or phosphoric acids, citric, gluconic, or formic or fulvic acid.

8. The method for the treatment of manure and slurry according to claim 1, **characterised in that** the amount of activated carbon to be added to the mixture is 2% by weight.

9. The method for the treatment of manure and slurry according to claim 1, **characterised in that** the biogenic polyamines are added in a proportion of 2 to 5 % by weight.

10. The method for the treatment of manure and slurry according to claim 1, **characterised in that** the biogenic polyamines are stabilised in galactomannans.

11. The method for the treatment of manure and slurry according to claim 1, **characterised in that** it also includes the step of adjusting the viscosity of the fertiliser product obtained by adding viscosity-adjusting agents.

12. The method for the treatment of manure and slurry according to claim 11, **characterised in that** xanthan gum and guar gum are used as viscosity-adjusting agents.

13. The method for the treatment of manure and slurry according to claim 11, **characterised in that** the amount of these viscosity-adjusting agents ranges between 0.1 and 3 % by weight.

14. A liquid fertiliser obtained with the method according to any of the preceding claims.

15. A use according to claim 14 of the liquid fertiliser for fertigation.

## Patentansprüche

1. Verfahren zur Behandlung von Dung und Gülle von Stalltieren in Viehzuchtbetrieben nach vorheriger Ansammlung von Gülle und Dung in Becken für diesen Zweck, wobei das Verfahren die folgenden Schritte einschließt:
i) Zerkleinern des Gemisches aus Gülle und Dung auf eine Feststoffgröße von weniger als 2 mm und Hinzufügen eines Dispergiermittels und eines Benetzungsmittels zu dem zerkleinerten Gemisch, wobei eine Dispersion in Lösung und ein korrekter Aufschluss der Feststoffe erhalten wird;
ii) Anwenden von Ultraschall (Sonikation) auf das dispergierte Gemisch, bis eine Feststoffgröße von weniger als 50 µm erzielt wird, wobei Zellen möglicher in dem Gemisch vorhandener Mikroorganismen physikalisch aufgebrochen werden;
iii) Erhöhen des C:N-Verhältnisses des beschallten Gemisches auf ein C:N-Verhältnis von mindestens 15 durch Hinzufügen von kohlenstoffreichem organischem Material;
iv) Homogenisieren des erhaltenen Gemisches und Hinzufügen einer Säure, um einen pH-Wert zwischen 4,5 und 6,5 zu erzielen,
v) Hinzufügen von Aktivkohle zu dem homogenisierten Gemisch und Wiederherstellung des C:N-Verhältnisses durch Hinzufügen von organischem Stickstoff in Form von biogenen Polyaminen und
vi) Mahlen des erhaltenen Gemisches in flüssiger Phase, um eine Partikelgröße von 10 bis 20 µm zu erhalten.

2. Verfahren zur Behandlung von Dung und Gülle nach Anspruch 1, **dadurch gekennzeichnet, dass** die Menge des Dispergiermittels im Bereich von 0,5 bis 2 Gew.-% liegt.

3. Verfahren zur Behandlung von Dung und Gülle nach Anspruch 1, **dadurch gekennzeichnet, dass** Huminstoffe als Dispergiermittel verwendet werden, wie Humin- und/oder Fulvosäuren und/oder Derivate davon.

4. Verfahren zur Behandlung von Dung und Gülle nach Anspruch 1, **dadurch gekennzeichnet, dass** die Menge des auf das Gemisch aufzubringenden Benetzungsmittels im Bereich von 0,1 bis 2 Gew.-% liegt.

5. Verfahren zur Behandlung von Dung und Gülle nach Anspruch 1, **dadurch gekennzeichnet, dass** das kohlenstoffreiche organische Material ausgewählt ist aus pflanzlichen Abfällen, Leonarditen, Kohlenstoffen oder Derivaten davon, Monosacchariden, Disacchariden, Polysacchariden, organischen Säuren, Glycerinen oder Fettsäuren.

6. Verfahren zur Behandlung von Dung und Gülle nach Anspruch 5, **dadurch gekennzeichnet, dass** das kohlenstoffreiche organische Material aus Leonarditen, Glycerin oder Polysacchariden ausgewählt wird.

7. Verfahren zur Behandlung von Dung und Gülle nach Anspruch 1, **dadurch gekennzeichnet, dass** die Säure ausgewählt ist aus der Gruppe bestehend aus Schwefel- oder Phosphorsäure, Zitronen-, Glucon-, Ameisen- oder Fulvosäure.

8. Verfahren zur Behandlung von Dung und Gülle nach Anspruch 1, **dadurch gekennzeichnet, dass** die Menge an Aktivkohle, die zu dem Gemisch hinzuzufügen ist, 2 Gew.-% beträgt.

9. Verfahren zur Behandlung von Dung und Gülle nach Anspruch 1, **dadurch gekennzeichnet, dass** die biogenen Polyamine in einem Anteil von 2 bis 5 Gew.-% hinzugefügt werden.

10. Verfahren zur Behandlung von Dung und Gülle nach Anspruch 1, **dadurch gekennzeichnet, dass** die biogenen Polyamine in Galaktomannanen stabilisiert werden.

11. Verfahren zur Behandlung von Dung und Gülle nach Anspruch 1, **dadurch gekennzeichnet, dass** es auch den Schritt des Einstellens der Viskosität des erhaltenen Düngemittelprodukts durch Hinzufügen von Viskositätseinstellmitteln einschließt.

12. Verfahren zur Behandlung von Dung und Gülle nach Anspruch 11, **dadurch gekennzeichnet, dass** Xanthangummi und Guargummi als viskositätseinstellende Mittel verwendet werden.

13. Verfahren zur Behandlung von Dung und Gülle nach Anspruch 11, **dadurch gekennzeichnet, dass** die Menge dieser viskositätseinstellenden Mittel im Bereich zwischen 0,1 und 3 Gew.-% liegt.

14. Flüssigdüngemittel, erhalten mit dem Verfahren nach einem der vorhergehenden Ansprüche.

15. Verwendung des Flüssigdüngemittels nach Anspruch 14 für die Fertigation.

## Revendications

1. Procédé destiné au traitement des fumiers et lisiers provenant d'animaux d'élevage dans d'exploitations de bétail après accumulation préalable du lisier et du fumier dans des bassins prévus à cet effet, le procédé comportant les étapes suivantes :
i) broyage du mélange de lisier et de fumier jusqu'à une taille des solides inférieure à 2 mm et ajout d'un dispersant et d'un agent mouillant au mélange broyé, obtenant une dispersion en solution et une désagrégation correcte des solides ;
ii) application d'ultrasons (sonication) au mélange dispersé jusqu'à ce qu'une taille de solides inférieure à 50 µm soit atteinte, décomposant physiquement les cellules d'éventuels micro-organismes présents dans le mélange ;
iii) augmentation du rapport C/N du mélange sonifié jusqu'à un rapport C:N d'au moins 15 en ajoutant de la matière organique riche en carbone ;
iv) homogénéisation du mélange obtenu et ajout d'un acide pour atteindre un pH compris entre 4,5 et 6,5,
v) ajout de charbon actif au mélange homogénéisé et rééquilibrage du rapport C:N par l'ajout d'azote organique sous forme de polyamines biogènes, et
vi) broyage du mélange obtenu en phase liquide pour obtenir une granulométrie de 10 à 20 µm.

2. Procédé destiné au traitement des fumiers et lisiers selon la revendication 1, **caractérisé en ce que** la quantité de dispersant est comprise dans la plage allant de 0,5 à 2 % en poids.

3. Procédé destiné au traitement des fumiers et lisiers selon la revendication 1, **caractérisé en ce que** des substances humiques sont utilisées comme dispersants, tels que les acides humiques et/ou fulviques et/ou des dérivés de ceux-ci.

4. Procédé destiné au traitement des fumiers et lisiers selon la revendication 1, **caractérisé en ce que** la quantité d'agent mouillant à appliquer au mélange est comprise dans la plage allant de 0,1 à 2 % en poids.

5. Procédé destiné au traitement des fumiers et lisiers selon la revendication 1, **caractérisé en ce que** la matière organique riche en carbone est choisie parmi les déchets végétaux, les léonardites, les carbones ou des dérivés de ceux-ci, les monosaccharides, les disaccharides, les polysaccharides, les acides organiques, les glycérines ou les acides gras.

6. Procédé destiné au traitement des fumiers et lisiers selon la revendication 5, **caractérisé en ce que** la matière organique riche en carbone est choisie parmi les léonardites, la glycérine ou les polysaccharides.

7. Procédé destiné au traitement des fumiers et lisiers selon la revendication 1, **caractérisé en ce que** l'acide est choisi dans le groupe constitué par les acides sulfurique ou phosphorique, l'acide citrique, l'acide gluconique ou les acides formique ou fulvique.

8. Procédé destiné au traitement des fumiers et lisiers selon la revendication 1, **caractérisé en ce que** la quantité de charbon actif à ajouter au mélange est de 2 % en poids.

9. Procédé destiné au traitement des fumiers et lisiers selon la revendication 1, **caractérisé en ce que** les polyamines biogènes sont ajoutées dans une proportion de 2 à 5 % en poids.

10. Procédé destiné au traitement des fumiers et lisiers selon la revendication 1, **caractérisé en ce que** les polyamines biogènes sont stabilisées dans des galactomannanes.

11. Procédé destiné au traitement des fumiers et lisiers selon la revendication 1, **caractérisée en ce qu'**elle comporte en outre l'étape d'ajustement de la viscosité du produit fertilisant obtenu par l'ajout d'agents d'ajustement de la viscosité.

12. Procédé destiné au traitement des fumiers et lisiers selon la revendication 11, **caractérisé en ce que** la gomme xanthane et de la gomme guar sont utilisées comme agents d'ajustement de la viscosité.

13. Procédé destiné au traitement des fumiers et lisiers selon la revendication 11, **caractérisés en ce que** la quantité de ces agents d'ajustement de la viscosité est comprise entre 0,1 et 3 % en poids.

14. Fertilisant liquide obtenu par la méthode selon l'une quelconque des revendications précédentes.

15. Utilisation selon la revendication 14 du fertilisant liquide pour la fertirrigation.
